# EUROPEAN PATENT SPECIFICATION

(11) **EP 2 177 564 B1**
(45) Date of publication and mention of the grant of the patent: **18.06.2014**
(21) Application number: 08777731.4
(22) Date of filing: 01.07.2008
(51) Int. Cl.: C08L 33/04, C08K 3/36, C08K 5/541, C08L 23/08

(54) **ACRYLIC ELASTOMER COMPOSITION**
ACRYLELASTOMERZUSAMMENSETZUNG
COMPOSITION ÉLASTOMÈRE ACRYLIQUE

(30) Priority: 10.08.2007 JP 2007208715
(43) Date of publication of application: 21.04.2010
(73) Proprietor: Unimatec Co., Ltd., Tokyo 105-8585 (JP)
(72) Inventor: ONO, Hideyuki, Kitaibaraki-shi Ibaraki 319-1544 (JP)
(74) Representative: HOFFMANN EITLE
(86) International application number: PCT/JP2008/061880
(87) International publication number: WO 2009/022499

(56) References cited:
- EP-A1- 1 228 899
- EP-A1- 1 550 694
- JP-A- 09 194 670
- JP-A- 10 007 803
- JP-A- 10 053 684
- JP-A- 2004 059 821
- JP-A- 2004 168 885
- JP-A- 2006 036 826
- JP-A- 2006 226 389

## Description

### TECHNICAL FIELD

The present invention relates to an acrylic elastomer composition, and more particularly to a silica-containing acrylic elastomer composition capable of providing improved extrudability and roll processability without lowering a heat resistance.

### BACKGROUND ART

It is well known that rubber materials containing silica as a reinforcing agent have a good heat resistance, as compared with those containing carbon black as a reinforcing agent, but the silica-containing acrylic elastomer composition has problems of flow characteristics, particularly an inadequate extrusion moldability. Thus, the acrylic elastomer compositions containing substantially no carbon black, but mostly silica have not been commercialized yet as hoses, etc.

To improve the extrudability of acrylic elastomer rubber materials, diester-based, polyester-based, polyetherester-based, or the like plasticizers have been used, but such plasticizers are not satisfactory for use in the high heat resistance-requiring acrylic rubber materials from the viewpoint of the heat resistance. However, the plasticizer is essential for obtaining a smooth extrudate surface and an efficient productivity in the extrusion molding of the acrylic rubber materials.

The acrylic rubber materials have an inadequate processability and a considerably high roll stickyness, which is particularly remarkable when silica is involved. Thus, it is necessary to add a large amount of a lubricant thereto as a processing aid. However, this leads to such a new problem as lower physical properties of vulcanizates.

An acrylic elastomer composition well balanced between the processing safety, the extrusion processability and the tensile strength, and suitable for use as rubber hoses and seal parts, which comprises a carboxyl-containing acrylic elastomer, silica (pH : 7.0-9.0), a silane coupling agent, a guanidine compound, and a specific aromatic diamine compound, is disclosed in Patent Document 1, where all the disclosed Examples and Comparative Examples use 0.3 parts by weight of liquid paraffin on the basis of 100 parts by weight of the polymer, and such a proportion of the liquid paraffin fails to give a satisfactory acrylic elastomer composition with respect to the extrudability (smoothness of extrudate surface, die swell) and roll processability (non-stickyness to rolls).

Patent Document 1 : JP-A-2004-59667

### DISCLOSURE OF THE INVENTION

### PROBLEM TO BE SOLVED BY THE INVENTION

The object of the present invention is to provide a silica-containing acrylic elastomer composition capable of providing improved extrudability and roll processability without lowering a heat resistance.

### MEANS FOR SOLVING THE PROBLEM

The object of the present invention can be attained by an acrylic elastomer composition, which comprises (A) 100 parts by weight of an acrylic elastomer having a carboxyl group as a cross-linkable group; (B) 5-300 parts by weight of silica; (C) 2-30 parts by weight of liquid paraffin, silicone oil, or fluoro oil; and optionally not more than 30 parts by weight of carbon black, wherein the amount of carbon black is not more than 50 wt.% on the basis of the silica.

### EFFECT OF THE INVENTION

In the case of the acrylic elastomer composition containing carbon black as a reinforcing agent, the functional groups existing on the surfaces of carbon black is considered to be a cause for deteriorating the heat resistance of acrylic rubber materials, whereas the silica-containing elastomer composition essentially has a distinguished heat resistance, but the heat resistance will be deteriorated when a plasticizer is used to improve the extrudability, or the physical properties of its vulcanizates will be inevitably lowered, when a large amount of a lubricant is used to improve the roll stickyness. In the case of the present acrylic elastomer composition, 2-30 parts by weight of liquid paraffin, silicone oil or fluoro oil is used on the basis of 100 parts by weight of acrylic elastomer, whereby the extrudability and roll processability can be improved without lowering a heat resistance proper to the acrylic rubber, and as a result a proportion of other lubricants (processing aids) such as stearic acid, etc. can be reduced to about 30wt.% or less of the usual one.

When 0.1-5 parts by weight of a silane coupling agent is further used together therewith, physical properties of its vulcanizates such as tensile strength, elongation at break, etc. and also extrusion moldability can be effectively improved.

Thus, the present acrylic elastomer composition can be effectively used as molding materials, particularly as extrusion molding materials for various uses requiring either less molding failures due to flow troubles or higher heat resistance, such as hoses, seals, diaphragms, rolls, etc.

### BEST MODES FOR CARRYING OUT THE INVENTION

The acrylic elastomer as Component (A) for use in the present invention includes elastomeric polymers such as alkyl (meth)acrylate homopolymer, alkyl (meth)acrylate-alkoxyalkyl (meth)acrylate copolymer, ethylene-acrylate copolymer rubber, etc., wherein (meth)acrylate means either acrylate or methacrylate.

The longer the alkyl chain of alkyl (meth)acrylate, the better the cold resistance, but the less adequate the oil resistance. When the chain becomes shorter, the above-mentioned tendency will be reversed. From the viewpoint of the balance between the cold resistance and the oil resistance, ethyl acrylate and n-butyl acrylate are preferable.

Alkoxyalkyl (meth)acrylate includes acrylates or methacrylates having an alkoxyalkyl group such as methoxymethyl, 2-methoxyethyl, ethoxymethyl, 2-ethoxyethyl, 2-butoxyethyl, 2- or 3-ethoxypropyl, etc., preferably 2-methoxyethyl acrylate and 2-ethoxyethyl acrylate. The alkoxyalkyl acrylate has an ether bond on the side chain, and thus is well balanced between the cold resistance and the oil resistance.

When the alkyl (meth)acrylate is used as a copolymer with alkoxyalkyl (meth)acrylate, the alkoxyalkyl (meth)acrylate can used upon copolymerization in a proportion of about 50wt.% or less, preferably about 20wt.% or less in the copolymer, thereby further improving the cold resistance and the oil resistance.

It is preferable that the alkyl (meth)acrylate homopolymer, or copolymer is further copolymerized with about 0.1 to about 15wt.% of a cross-linking site-formable monomer on the basis of the acrylic elastomer. The cross-linking site-formable monomer is
(a) Carboxyl group-containing vinyl monomer

Among the cross-linking site-formable monomers, the carboxyl group containing vinyl monomer is subjected to the copolymerization. Carboxyl group-containing vinyl monomer includes, for example, unsaturated monocarboxylic acids such as acrylic acid, methacrylic acid, etc.; and monoalkyl esters of unsaturated dicarboxylic acids such as maleic acid, fumaric acid, itaconic acid, citraconic acid, etc., for example, monomethyl maleate, monoethyl maleate, mono-n-butyl maleate, monomethyl fumarate, monoethyl fumarate, mono-n-butyl fumarate, etc. Chlorine group-containing vinyl monomer includes, for example, chloroethyl vinyl ether, chloroethyl acrylate, vinyl benzyl chloride, vinyl chloroacetate, allyl chloroacetate, chloromethylstyrene, etc. Furthermore, alkyl (meth)acrylate copolymer prepared by copolymerization of both carboxyl group-containing vinyl monomer and chlorine group-containing vinyl monomer can be also used.

Ethylene-acrylate-based copolymer rubber can be also used as the acrylic elastomer, and includes the following copolymer rubbers :
Ethylene-acrylic acid ester copolymer rubber : which is a copolymer elastomer comprising about 60 to about 20wt.% of ethylene and about 40 to about 80wt.% of alkyl (meth)acrylate containing an alkyl group having 1-8 carbon atoms, and further copolymerizable with not more than 10wt.% of the afore-mentioned cross-linking site-formable monomer.
Ethylene-acrylic acid ester-vinyl acetate copolymer rubber : which is a copolymer elastomer comprising about 45 to about 5wt.% of ethylene, about 5 to about 90wt.% of the afore-mentioned (meth)acrylate ester (and alkoxyalkyl (meth)acrylate), and about 45 to about 5wt.% of vinyl acetate, and further copolymerizable with not more than 10wt.% of the afore-mentioned cross-linking site-formable monomer.
Acrylic acid ester-unsaturated nitrile-conjugated diene copolymer rubber and hydrogenated products thereof : which are a copolymer comprising about 5 to about 75wt.% of the afore-mentioned (meth)acrylate ester (and alkoxyalkyl (meth)acrylate), 60-10wt.% of an unsaturated nitrile such as (meth)acrylonitrile, ethacrylonitrile, α-chloroacrylonitrile, and α-fluoroacrylonitrile, and 15-85wt.% of a conjugated diene such as butadiene, 2-chlorobutadiene, and 2-methylbutadiene, and hydrogenated product thereof prepared by hydrogenating about 10 to 100% of the unsaturated bonds of the copolymer elastomer.

The acrylic elastomer can be further copolymerized with not more than about 10wt.% of an ethylenic unsaturated monomer copolymerizable with those such as styrene, α-methylstyrene, vinyltoluene, vinylnaphthalene, cyclohexyl acrylate, phenyl acrylate, phenyl methacrylate, benzyl acrylate, ethyl vinyl ether, n-butyl vinyl ether, ethylene, piperylene, isoprene, pentadiene, butadiene, etc.

To improve the kneading processability, extrusion processability, etc., if necessary, the acrylic elastomer can be further copolymerized with not more than about 10wt.% of a polyfunctional unsaturated monomer or oligomer, for example, diacrylate or dimethacrylate of alkyleneglycols such as ethylene glycol, propylene glycol, 1,4-butanediol., 1,6-hexanediol, 1,9-nonanediol, neopentyl glycol, tetraethylene glycol, tripropylene glycol, polypropylene glycol; bisphenol A-ethylene oxide adduct diacrylate, dimethyloltricyclodecane diacrylate, glycerine methacrylate acrylate, 3-acryloyloxyglycerine monomethacrylate, etc.

Silica as Component (B) for use in the present invention includes, for example, hydrous amorphous silicon dioxide having a pH of 6.5·8.5, preferably 7.0-8.0 (determined as pH in an aqueous 4wt.% suspension), and a specific surface area of not less than about 150m²/g, preferably not less than about 300m²/g (BET method ; according to ISO 5794-1), etc. and can be used in a proportion of about 5 to about 300 parts by weight, preferably about 10 to about 100 parts by weight, on the basis of 100 parts by weight of acrylic elastomer. Below the lower end of the range for the silica neither the desired reinforcing effect nor heat resistance is obtainable, whereas above the upper end of the range, the kneadability, etc. will be injured. Carbon black can be used together with silica in such a proportion as not to spoil the desired object of the present invention, that is, in a portion of not more than 50wt.% on the basis of the weight of silica, and not more than about 30 parts by weight on the basis of 100 parts by weight of acrylic elastomer.

Liquid paraffin, silicone oil or fluoro oil for use as Component (C) includes the following :
Liquid paraffin : which is a normal alkane series, an isoalkane series, or a cycloalkane series, each having a viscosity (40 °C) of 3-100cSt, preferably 3-30cSt
Silicone oil : which is straight silicone oil or modified silicone oil, each having a viscosity (25°C) of 0.1-1,000,000cSt, preferably 10-10,000cSt
Fluoro oil : which is a perfluoroalkyl ether series having a viscosity (40°C) of 10-1,000cSt, preferably 10-100cSt

Fluoro oil represented by the following general formula can be used :
RfO(CF₂O)ₓ(C₂F₄O)_{y}(C₃F₆O)_{z}Rf

More specifically, those represented by the following general formulae (1)-(4) can be used, and furthermore the one represented by the following general formula (5) can be also used, where Rf is a perfluoro lower alkyl group having 1-5 carbon atoms, preferably 1-3 carbon atoms, such as a perfluoromethyl group, a perfluoroethyl group, a perfluoropropyl group, etc.
(1) RfO(CF₂CF₂O)ₘ(CF₂O)ₙRf
   , where m+n=3-200, m:n=10-90:90-10, and the CF₂CF₂O group and the CF₂O group are bonded to the main chain at random, which can be obtained by completely fluorinating the precursor formed by photo-oxidation polymerization of tetrafluoroethylene.
(2) RFO[CF(CF₃)CF₂O]ₘ (CF₂O)ₙRf
   , where m+n=3-200, m:n=10-90:90-10, and the CF(CF₃)CF₂O group and the CF₂O group are bonded to the main chain at random, which can be obtained by completely fluorinating the precursor formed by photo-oxidation polymerization of hexafluoropropylene.
(3) RfO[CF(CF₃)CF₂O]ₚ(CF₂CF₂O)_{q}(CF₂O)ᵣRf
   , where p+q+r=3-200, q and r may be zero, (q+r)/p=0-2, and the CF(CF₃)CF₂O group, the CF₂CF₂O group, and the CF₂O group are bonded to the main chain at random, which can be obtained by completely fluorinating the precursor formed by photo-oxidation polymerization of hexafluoropropylene and tetrafluoroethylene.
(4) RfO[CF(CF₃)CF₂O]ₛ (CF₂CF₂O)ₜRf
   , where s+t=2-200, t may be zero, t/s=0-2, and the CF(CF₃)CF₂O group and the CF₂CF₂O group can be bonded to the main chain at random, which can be obtained by completely fluorinating the precursor formed by photo-oxidation polymerization of hexafluoropropylene and tetrafluoroethylene, or by subjecting hexafluoropropylene oxide or tetrafluoroethylene oxide to anionic polymerization in the presence of a cesium fluoride catalyst, and treating the resulting acid fluoride compound having a terminal -CF(CF₃)COF group with a fluorine gas.
(5) F(CF₂CF₂CF₂O)₂₋₁₀₀C₂F₅
   , which can be obtained by subjecting 2,2,3,3-tetrafluorooxetane to anionic polymerization in the presence of a cesium fluoride catalyst, and treating the resulting fluorine-containing polyether (CH₂CF₂CF₂O)ₙ with a fluorine gas at about 160° to about 300°C under ultraviolet irradiation.

Component (C) can be used in a proportion of 2-30 parts by weight, preferably 3-10 parts by weight, on the basis of 100 parts by weight of acrylic elastomer. When Component (C) is used in a proportion below the lower end of the range, neither extrusion processability not roll processability will be improved, whereas above the upper end of the range not only the physical properties of vulcanizates (tensile strength and elongation) will be lowered, but also the product appearance will be often inadequate due to blooming.

To improve the physical properties of vulcanizates and extrusion moldability, it is desirable to use 0.1-5 parts by weight, preferably 0.3-2 parts by weight of a silane coupling agent as Component (D) on the basis of 100 parts by weight of acrylic elastomer.

Various kinds of the silane coupling agent can be used and includes, for example, vinyltrimethoxysilane, vinyltriethoxysilane, vinyltris( β -methoxyethoxy)silane, vinyltrichlorosilane, vinyltriacetoxysilane, N-(β-aminoethyl)- γ-aminopropyltrimethoxysilane, γ-aminopropyltrimethoxysilane, γ-aminopropyltriethoxysilane, γ-glycidoxypropyltrimethoxysilane, γ-glycidoxypropylmethyldimethoxysilane, β -(3,4-epoxycyclohexyl)-ethyltrimethoxysilane, γ -methacryloxypropyltris(β-methoxyethoxy)-silane, γ-mercaptopropyltrimethoxysilane, methyltrimethoxysilane, methyltriethoxysilane, hexamethyldisilazane, γ-anilinopropyltrimethoxysilane, N-[β -(N-vinylbenzylamino)ethyl]- γ-aminopropyltrimethoxysilane - hydrochloride, etc., and preferably a mercapto-containing silane coupling agent is used.

The acrylic elastomer composition comprising the foregoing essential components and desirable component can appropriately further contain a vulcanizing agent, a vulcanization promoter, an antioxidant, a lubricant, etc.

When the acrylic elastomer is copolymerized with about 0.1 to about 15wt.%, preferably about 1 to about 10wt.%, of carboxyl group-containing vinyl monomer, well known vulcanizing agents and vulcanization promoters can be used. Diamine compounds are characteristically preferable as a vulcanizing agent. From the viewpoint of scorching resistance, an aromatic diamine compound, particularly a p-diamino aromatic compound, can be used in a proportion of about 0.1 to about 5 parts by weight, preferably about 0.2 to about 4 parts by weight, on the basis of 100 parts by weight of acrylic elastomer. Together with the diamine-based vulcanizing agent, well known vulcanization promoters can be used, if required, and preferably a guanidine compound can be used as a vulcanization promoter in a proportion of about 0.1 to about 10 parts by weight, preferably about 0.3 to about 6 parts by weight, on the basis of 100 parts by weight of acrylic elastomer.

When the acrylic elastomer is copolymerized with about 0.1 to about 15wt.%, preferably 0.3-5wt.%, of a reactive halogen-containing vinyl monomer, particularly a chlorine group-containing vinyl monomer, sulfur, a sulfur-providing compound, an amine compound, a triazine compound, etc. can be used as a vulcanizing agent. When good normal state physical properties are required, sulfur can be used as a vulcanizing agent in a proportion of 0.1-5 parts by weight, preferably 0.1-2 parts by weight, on the basis of 100 parts by weight of acrylic elastomer, where it is preferable to use well known vulcanization promoter such as metallic soap, etc. at the same time. When good compression set characteristics are required, a triazine compound such as 2,4,6-trimercapto-s-triazine, etc. can be used as a vulcanizing agent in a proportion of 0.1-10 parts by weight, preferably about 0.3 to about 2 parts by weight, on the basis of 100 parts by weight of acrylic elastomer, where it is preferable to use well known vulcanization promoters such as metal salts of carbamic acid at the same time.

The composition can be prepared by kneading the components excluding a vulcanizing agent and a vulcanization promoter through a kneader such as a Banbury mixer, etc., and then adding the vulcanizing agent and the vulcanization promoter thereto through open rolls. The resulting composition is extrusion molded at about 60° to about 110°C, and then steam vulcanized at about 120° to about 180°C for about 10 to about 120 minutes, or press molded at 150° -200°C for 2-30 minutes, if required, followed by oven vulcanization (secondary vulcanization) at about 150° to about 200°C for about 1 to about 20 hours.

### EXAMPLES

The present invention will be described in detail below, referring to Examples.

### EXAMPLE 1

| | Parts by weight |
|---|---|
| Carboxyl-containing acrylic rubber (Noxtite PA-522HF, a product of Unimatec Co.) | 100 |
| Hydrous amorphous silicon dioxide (Carplex #67, a product of DSL Japan Co.; pH:7-8, Specific Surface area: 380m²/g) | 55 |
| Liquid paraffin (Paraffin 150S, a product of Chuo Kasei Co.; 25cSt) | 5 |
| Stearic acid | 1 |
| 4,4' -bis(α, α -dimethylbenzyl) diphenylamine | 2 |
| Mercaptopropyltrimethoxysilane | 1 |
| 2,2-bis[4-(3-aminophenoxy) phenyl] propane | 1 |
| Di-o-tolylguanidine | 2 |

The foregoing components were used. At first, the components excluding the vulcanizing agent and the vulcanization promoter were kneaded, through a Banbury mixer, and then the vulcanizing agent and the vulcanization promoter were added thereto through open rolls. The resulting composition was press vulcanized at 160°C for 30 minutes and then oven vulcanized (secondary vulcanization) at 175°C for 4 hours, thereby conducting vulcanization molding.

Composition used for the vulcanization molding and vulcanizate obtained by vulcanization molding of the composition were subjected to determination of the following test items :
Physical properties of vulcanizate : According to JIS K6251 and JIS K6253 corresponding to ASTM D2240 and D412
Air oven aging test : After heating the vulcanizates at 175°C for 500 hours or 1,000 hours and at 200°C for 250 hours in an air oven, physical properties of each of the air-oven heated vulcanizates were determined and calculate percent changes thereof
Extrudability : The composition was extruded into a tubular form by a 25mm diameter-extruding machine (L/D=16), made by Tosoku Seimitsu Co., under such conditions as nozzle diameter: 4mm, hopper temperature : 30°C, barrel temperature : 60°C, head temperature : 90°C, and revolution rate : 60rpm to visually observe the appearance of extruded surface and determine a die swell
Roll processability : By evaluating a sticking degree of rubber compound to rolls when the vulcanizing agent and the vulcanization promoter were added through open rolls (where the higher the sticking degree, the less adequate the processability)

### EXAMPLE 2

In Example 1, the same amount of silicone oil (KF-96, a product of Shin-Etsu Chemical Co. ; 100cSt) was used in place of the liquid paraffin.

### EXAMPLE 3

In Example 1, the same amount of fluoro oil (Varielta 100, a product of NOK Kluber Co.; 95cSt) was used in place of the liquid paraffin.

### EXAMPLE 4

In Example 1, the amount of the liquid paraffin was changed to 10 parts by weight.

### EXAMPLE 5

In Example 1, 90 parts by weight of carboxyl-containing acrylic rubber and 10 parts by weight of ethylene-alkyl acrylate copolymer rubber (Vamac G, a product of DuPont Co.) were used as the acrylic elastomers.

### REFERENCE EXAMPLE 6

In Example 1, the same amount of chlorine-containing acrylic rubber (Noxtite PA-402K, a product of Unimatec Co.) was used in place of the carboxyl-containing acrylic rubber, and 0.5 parts by weight of 2,4,6-trimercapto-s-triazine and 1.5 parts by weight of zinc dibutyldithiocarbamate were used in place of the 2,2-bis[4-(3-aminophenoxy) phenyl] propane and the di-o-tolylguanidine.

### EXAMPLE 7

In Example 1, no mercaptopropyltrimethoxysilane was used.

### COMPARATIVE EXAMPLE 1

In Example 1, neither liquid paraffin nor mercaptopropyltrimethoxysilane were used.

### COMPARATIVE EXAMPLE 2

In Example 1, the amount of hydrous amorphous silicon dioxide (Carplex #67) was changed to 58 parts by weight, and the same amount of ether-ester-based plasticizer (Adekacizer RS735, a product of ADEKA Co.) was used in place of the liquid paraffin.

### COMPARATIVE EXAMPLE 3

In Example 1, 48 parts by weight of another hydrous amorphous silicon dioxide (Nipseal VN3, a product of Toso-silica Co.) was used, and the same amount of ether-ester-based plasticizer (Adekacizer RS735) was used in place of the liquid paraffin.

### COMPARATIVE EXAMPLE 4

In Example 1, the amount of hydrous amorphous silicon dioxide (Carplex #67) was changed to 35 parts by weight, and 30 parts by weight of carbon black (N550 carbon) was additionally used.

### COMPARATIVE EXAMPLE 5

In Example 1, the amount of liquid paraffin (150S) was changed to one part by weight, and no mercaptopropyltrimethoxysilane was used.

The results of the foregoing Examples and Comparative Examples are shown in the following Table.

**Table**

| Test Item | Example No. | | | | | | | Comp. Ex. No. | | | | |
|---|---|---|---|---|---|---|---|---|---|---|---|---|
| | 1 | 2 | 3 | 4 | 5 | 6* | 7 | 1 | 2 | 3 | 4 | 5 |
| [Physical properties of vulcanizates] | | | | | | | | | | | | |
| Hardness (Duro A) | 68 | 67 | 67 | 67 | 69 | 70 | 67 | 69 | 65 | 68 | 68 | 69 |
| Tensile strength (MPa) | 12.1 | 11.9 | 11.7 | 11.2 | 12.7 | 12.4 | 10.1 | 12.5 | 12.2 | 14.3 | 11 | 12.4 |
| Elongation at break (%) | 310 | 300 | 300 | 270 | 340 | 270 | 240 | 310 | 320 | 320 | 235 | 300 |

| [175°C/500hr Aging test] | | | | | | | | | | | | |
|---|---|---|---|---|---|---|---|---|---|---|---|---|
| Hardness (Duro A) | 71 | 74 | 72 | 71 | 72 | 73 | 73 | 71 | 74 | 72 | 81 | 72 |
| Percent change (%) | 104 | 110 | 107 | 106 | 104 | 104 | 109 | 103 | 114 | 106 | 119 | 104 |
| Tensile strength (MPa) | 7.8 | 7.5 | 7.4 | 7.1 | 7.7 | 6.5 | 7.4 | 8.2 | 8.5 | 12.2 | 7.8 | 8.1 |
| Percent change (%) | 64 | 63 | 63 | 63 | 61 | 52 | 73 | 66 | 70 | 85 | 71 | 65 |
| Elongation at break (%) | 300 | 260 | 280 | 280 | 320 | 260 | 250 | 290 | 220 | 250 | 165 | 290 |
| Percent change (%) | 97 | 87 | 93 | 104 | 94 | 96 | 104 | 94 | 69 | 78 | 70 | 97 |

| [175°C/1000hr Aging test] | | | | | | | | | | | | |
|---|---|---|---|---|---|---|---|---|---|---|---|---|
| Hardness (Duro A) | 75 | 76 | 75 | 76 | 79 | 77 | 77 | 74 | 84 | 82 | 86 | 75 |
| Percent change (%) | 110 | 113 | 112 | 113 | 114 | 110 | 115 | 107 | 129 | 121 | 126 | 109 |
| Tensile strength (MPa) | 6 | 6.2 | 5.7 | 5.5 | 6.8 | 5.3 | 6 | 6.4 | 7.8 | 8 | 7.3 | 6.5 |
| Percent change (%) | 50 | 52 | 49 | 49 | 54 | 43 | 59 | 51 | 64 | 66 | 66 | 52 |
| Elongation at break (%) | 240 | 220 | 220 | 220 | 210 | 200 | 190 | 240 | 150 | 150 | 100 | 230 |
| Percent change (%) | 77 | 73 | 73 | 81 | 62 | 74 | 79 | 77 | 47 | 47 | 43 | 77 |

| [200°C/250hr Aging test] | | | | | | | | | | | | |
|---|---|---|---|---|---|---|---|---|---|---|---|---|
| Hardness (Duro A) | 78 | 77 | 76 | 79 | 80 | 80 | 80 | 76 | 88 | 83 | 94 | 78 |
| Percent change (%) | 115 | 115 | 113 | 118 | 116 | 114 | 119 | 110 | 135 | 122 | 138 | 113 |
| Tensile strength (MPa) | 5.4 | 5.9 | 5.8 | 5.1 | 6:7 | 5.5 | 4.5 | 5.5 | 8.4 | 9.4 | 7.7 | 5.7 |
| Percent change (%) | 45 | 50 | 50 | 46 | 53 | 44 | 45 | 44 | 69 | 66 | 70 | 46 |
| Elongation at break (%) | 180 | 170 | 190 | 160 | 140 | 190 | 140 | 170 | 80 | 100 | 50 | 170 |
| Percent change (%) | 58 | 57 | 63 | 59 | 41 | 70 | 58 | 55 | 25 | 31 | 21 | 57 |

| [Extrudability] | | | | | | | | | | | | |
|---|---|---|---|---|---|---|---|---|---|---|---|---|
| Appearance of extruded surface | G | G | G | G | Exc. | G | P | P | G | P | G | P |
| Die swell (%) | 180 | 150 | 160 | 140 | 120 | 170 | 230 | 280 | 170 | 300 | 120 | 270 |

| [Roll processability] | | | | | | | | | | | | |
|---|---|---|---|---|---|---|---|---|---|---|---|---|
| Sticking degree | L | L | L | L | L | L | L | H | H | H | L | H |

| | | | | | | | | | | | | |
|---|---|---|---|---|---|---|---|---|---|---|---|---|
| Remarks : In evaluation of appearance of extruded surface, "Exc." is an abbreviation of "excellent" , "G" is "good" , and "P" is "poor" In evaluation of sticking degree, "H" is an abbreviation of "high" and "L" is "low" * indicates a reference example which is not within the scope of the present application. | | | | | | | | | | | | |

## Claims

1. An acrylic elastomer composition, which comprises:
(A) 100 parts by weight of an acrylic elastomer having a carboxyl group as a cross-linkable group; (B) 5-300 parts by weight of silica; (C) 2-30 parts by weight of liquid paraffin, silicone oil, or fluoro oil; and optionally not more than 30 parts by weight of carbon black, wherein the amount of carbon black is not more than 50 wt.% on the basis of the silica.

2. An acrylic elastomer composition according to Claim 1, wherein (D) 0.1-5 parts by weight of a silane coupling agent is further contained.

3. An acrylic elastomer composition according to Claim 1 or 2, where the silica as Component (B) has a pH of 6.5-8.5 (determined as pH in an aqueous 4 wt.% suspension) and a specific surface area of 150 m²/g or more (BET method).

4. Extrusion molded articles produced by extrusion molding of an acrylic elastomer composition according to Claim 1 or 2.

5. Extrusion molded articles according to Claim 4 for use as hoses, seals, diaphragms or rolls.

## Patentansprüche

1. Acrylelastomerzusammensetzung, enthaltend:
(A) 100 Gewichtsteile eines Acrylelastomers, das eine Carboxylgruppe als vernetzbare Gruppe hat, (B) 5-300 Gewichtsteile Silica, (C) 2-30 Gewichtsteile flüssiges Paraffin, Silikonöl oder Fluoröl; sowie wahlweise nicht mehr als 30 Gewichtsteile Ruß, wobei die Menge des Rußes nicht mehr als 50 Gew.% auf Basis des Silica beträgt.

2. Acrylelastomerzusammensetzung nach Anspruch 1, die weiterhin (D) 0,1-5 Gewichtsteile eines Silankupplungsmittels enthält.

3. Acrylelastomerzusammensetzung nach Anspruch 1 oder 2, in der das Silica als Komponente (B) einen pH-Wert von 6,5-8,5 (bestimmt als pH-Wert in einer wässrigen 4 Gew.% Suspension) und eine spezifische Oberfläche von 150 m²/g oder mehr (BET Methode) hat.

4. Extrusionsformkörper, der durch Strangpressen aus der Acrylelastomerzusammensetzung nach Anspruch 1 oder 2 hergestellt ist.

5. Extrusionsformkörper nach Anspruch 4 zur Verwendung als Schläuche, Dichtungen, Diaphragmen oder Rollen.

## Revendications

1. Composition élastomère acrylique, qui comprend : (A) 100 parties en poids d'un élastomère acrylique ayant un groupe carboxyle en tant que groupe pouvant être réticulé ; (B) 5-300 parties en poids de silice ; (C) 2-30 parties en poids de paraffine liquide, d'huile de silicone, ou d'huile fluorée ; et optionnellement pas plus de 30 parties en poids de noir de carbone, dans laquelle la quantité de noir de carbone n'est pas plus de 50 % en poids sur la base de la silice.

2. Composition élastomère acrylique selon la revendication 1, dans laquelle (D) 0,1-5 parties en poids d'un agent de couplage au silane sont en outre contenues.

3. Composition élastomère acrylique selon la revendication 1 ou 2, dans laquelle la silice en tant que Composant (B) a un pH de 6,5-8,5 (déterminé en tant que pH dans une suspension aqueuse à 4 % en poids) et une surface spécifique de 150 m²/g ou plus (procédé BET).

4. Articles moulés par extrusion produits par moulage par extrusion d'une composition élastomère acrylique selon la revendication 1 ou 2.

5. Articles moulés par extrusion selon la revendication 4 pour utilisation en tant que tuyaux, joints, diaphragmes ou rouleaux.
